# EUROPEAN PATENT APPLICATION

(11) **EP 2 081 377 A1**
(43) Date of publication of application: **22.07.2009**
(21) Application number: 08290041.6
(22) Date of filing: 18.01.2008
(51) Int. Cl.: H04N 5/445, G06F 3/048

(54) **System and method for presenting on a television screen an interactive character that responds to user input**

(71) Applicant: Alcatel Lucent, 75008 Paris (FR)
(72) Inventor: Ben-Moshe, Dori, Ramat-Hasharon, 47201 (IL)
(74) Representative: D'Halleweyn, Nele Veerle Trees Gertrudis

(57) **Abstract**

System for presenting on a television screen an interactive character that responds to user input comprising: image generation means for generating an image of the interactive character, wherein the image generation means are connectable to at least a television for displaying the image of the generated interactive character on the television screen; input means for receiving input from a user; and control means connected to the input means and to the image generation means, for controlling the appearance of the interactive character in response to the user input received by the input means.

## Description

The present invention provides a system for presenting on a television screen an interactive character that responds to user input.

The present invention further provides a method for presenting on a television screen an interactive character that responds to user input.

In recent years television is evolving from a massive broadcasting system to a personal entertainment system. The advance of digital television and IP-television (IPTV) provides, in addition to a larger selection of channels with higher quality images, the possibility to offer end-users a personal viewing experience through, for example, video-on-demand services, wherein the end-user decides for himself or herself what to watch and when to watch it, independent of the programming of a particular channel.

So far, these services are presented in rather static, impersonal, technically dictated manners. This means that every user will choose his pickings from the very same screens which are organised in a menu-like fashion.

The present invention provides television with interactivity in a more personalised, pleasing way, that encourages a user to purchase services.

In an embodiment of the present invention a system is provided for presenting on a television screen an interactive character that responds to user input comprising: image generation means for generating an image of the interactive character, wherein the image generation means are connectable to at least a television for displaying the image of the generated interactive character on the television screen; input means for receiving input from a user; and control means connected to the input means and to the image generation means, for controlling the appearance of the interactive character in response to the user input received by the input means.

The interactive character is linked to or "owned by" a user. It is depicted on the television in the form of a figure, such as an animal or cartoon character. In one embodiment, the user can initially pick the character of his or her preference from a list of available characters provided to him or her by the system.

In one embodiment, controlling the appearance of the interactive character comprises animating the interactive character. An example of an animation is the interactive character extending its arm showing a "thumb up" to acknowledge a command given by the user.

In an embodiment images of the available characters are stored in a central application server. A set of different images of every character is stored, representing the character in different situations: for example the character in different sizes to represent a character growing, the character in different moods, such as sad, happy, bored, etcetera. In a further embodiment at least a part of the stored images of the interactive character together form at least one animation.

In an alternative embodiment, the interactive character is defined by a set of objects, each object having a graphical representation. The interactive character is visualised on the television screen by displaying the objects on the screen. The appearance of the interactive character is changeable by at least one of: changing the position of an object relative to another object; and changing a property, such as the colour, the size, or the aspect ratio of an object. In a further embodiment, the interactive character responds in an animated way to user input by gradually applying changes or sequentially applying a number of changes.

In a further embodiment, the interactive character is displayed on the screen by means of a Flash-animation by means of Flash-technology provided by Adobe Systems Incorporated, San Jose, CA, USA. In an alternative embodiment, the interactive character is animated on the screen by means of Silverlight-technology from the Microsoft Corporation, Redmond, WA, USA. The man skilled in the art will appreciate that any technology or tool that allows for the display of animated graphics is usable for generating the visual appearance of the interactive character on the television screen.

In a further embodiment, the image generation means comprise an application server.

In another embodiment the interactive character responds to user input by showing a text balloon on the television screen containing text the interactive character is communicating to the user.

An alternative embodiment makes use of audio playback in response to user input. Audio messages and/ or sound effects are stored in an application server. After receiving input from the user the system selects an appropriate audio file for playback in response to the user input.

In an alternative embodiment, the image generation means comprise a set-top box.

The user interacts with the interactive character by providing commands and/or requests. The interactive character responds by updating properties that are reflected in the image shown on the screen. In an exemplary embodiment of the present invention the properties comprise the colour of the interactive character, and its mood, wherein the mood is for example visualised by displaying facial expressions, such as smiling. The response of the interactive character compromises a single update, but also a sequences of updates resulting in an animation of the interactive character. Commands comprise simple configurations, such as initially selecting an interactive character by the user as his or her personal interactive character, or selecting the colour of the interactive character.

In a specific embodiment of the invention, the television comprises an IPTV.

In a further embodiment of the present invention, a system is provided, wherein the input means comprise at least one of: a set-top box for receiving user input from set-top box input means connected to the set-top box; an SMS-gateway for receiving user input by means of an SMS-message; an OSS-gateway for receiving user input via an Operations Support System; and a BSS-gateway for receiving user input via a Business Support System.

In one specific embodiment the input means comprise a set-top box for receiving a representation of a video signal through IP-communication (IP, Internet Protocol) and for displaying images represented by the video-signal on a television. In alternative embodiments the input means comprise a set-top box for digital cable television and satellite television respectively. Irrespective of the particular set-top box, the set-top box input means comprise a remote control unit of the set-top box. By pressing buttons on the remote control unit, the user interacts with the interactive character displayed on the television by means of the set-top box, which sends messages or signals representing the pressed buttons to the control means. In a preferred embodiment the control means comprise an application server. The control means determine what property of the interactive character is to change and correspondingly change the appearance of the interactive character to be displayed on the television. As soon as the control means have determined the changed appearance of the interactive character, the image generating means display an updated image on the television.

In an alternative embodiment the user provides input by composing an SMS-message on a mobile phone and sending this SMS-message to a dedicated phone number. The SMS-message is then received by an SMS-gateway that forwards the user input to the control means.

In a further embodiment of the present invention, a system is provided, wherein the user input comprises a purchase order and the system further comprises purchase order processing means for processing the received purchase order. Examples of purchase orders are: the purchase of video-on-demand title, the purchase of a subscription for a subscription channel, or the purchase of a pay-per-view event. In one particular embodiment the purchase order processing means comprise a Business Support System (BSS).

Another embodiment according to the present invention provides a system, further comprising output sending means for sending a message in response to the user input received by the input means.

In a further embodiment the present invention provides a system, wherein the output sending means comprise at least one of: an SMS-gateway for sending an SMS-message; an OSS-gateway for sending a message to the Operations Support System; and a BSS-gateway for sending a message to a Business Support System. This allows the system to make the interactive character communicate back to the user in other ways in addition to communicating through the television.

In a further embodiment wherein the output sending means comprise an SMS-gateway, the user sends a request by means of the input means for sending a text message to a telephone device. The interactive character asks the user to enter the message and the phone numbers of the intended recipient of the message, which the user provides by means of the input means. Subsequently, the system sends the text message by means of the SMS-gateway as an SMS-message to the telephone of the recipient. This way the system provides an alternative way of sending SMS-messages, for example in case the user does not have a telephone available.

In an alternative embodiment the output sending means send a message from one interactive character to another interactive character defined by the owner of the first interactive character. In a specific embodiment the message comprises an invitation to view shared content. Shared content comprises private images and video uploaded by the user to share these images and videos with other users, for example friends and family. The man skilled in the art will appreciate that shared content may relate to any file a user wishes to share with one or more other users.

In again an alternative embodiment, the output sending means comprise audio generation means. Through the OSS-gateway voicemail messages are requested, that are read-out to the user through the audio generation means.

In an alternative embodiment, SMS-messages are received through the SMS-gateway and/or the OSS-gateway for reading-out through the audio generation means.

The present invention provides further a method for presenting on a television screen an interactive character that responds to user input, comprising: generating an image of the interactive character; displaying the generated image of the interactive character on the television screen; receiving input from a user; changing the image of the interactive character in response to the received user input; and updating the displayed image of the interactive character on the television screen with the changed image of the interactive character.

The present invention also provides a method, wherein the user input comprises a purchase order, and the method further comprises: processing the received purchase order.

Furthermore, the invention provides a method, further comprising sending an output message in response to the received user input.

Further advantages and preferred embodiments will be provided with reference to the annexed figure, wherein:

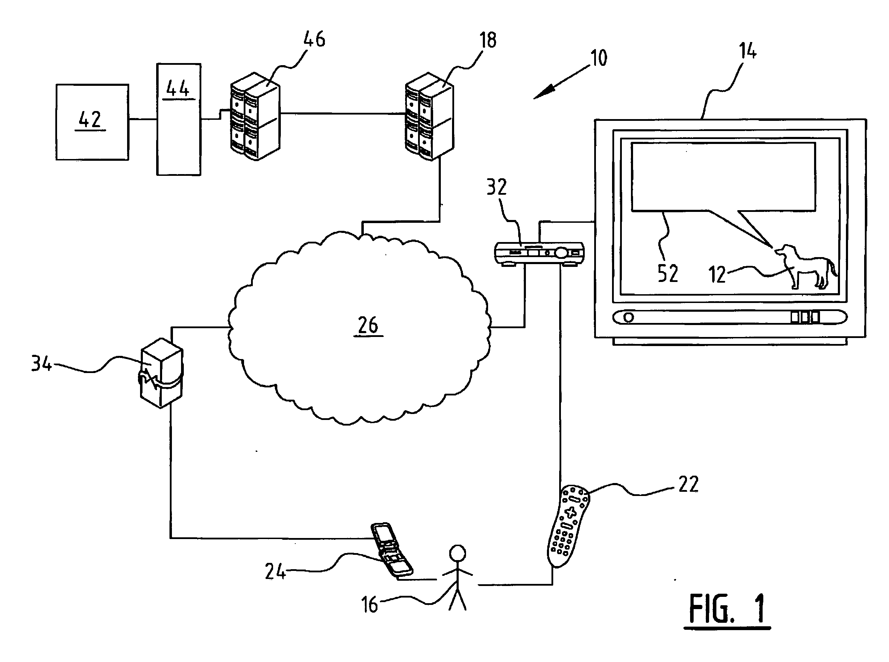

Figure 1 shows a schematic overview of a preferred embodiment of the present invention.

An interactive character 12 is displayed on a television 14 connected to a set-top box 32 suitable for receiving video through IP communication and displaying a corresponding image on the television 14. In the example shown in figure 1, the set-top box is capable of displaying Flash-animations by means of Flash-software provided by Adobe Systems Incorporated, San Jose, CA, USA. The interactive character is visualised by means of this Flash-technology.

The interactive character 12 is "owned" or linked to a user 16. By means of the remote control unit 22 of the set-top box 32 the user is able to send input through the set-top box 32 to the interactive character application server 18. The user input comprises for example commands to change properties of the interactive character 12 such as the colour of the interactive character. Another example of user input send by the user 16 by means of the remote control unit 22 via the set-top box 32 through the interactive character application server 18 are purchase orders, for example for requesting video-on-demand, a subscription to a channel, or a request for a pay-per-view event. Alternatively, the user 16 sends input by means of SMS-messages from a mobile phone 24 through an SMS gateway 34 to the interactive character application server 18. The connection between the interactive character application server 18 and the set-top box 32 is provided by IPTV-middlewear 26, which might be an ADSL-connection or IP-over-cable connection.

The interactive character application server 18 stores properties of the interactive character 12 and updates these properties according to user input received from the user 16. Furthermore, the interactive character application server 18 initiates services requested by the user 16 by means of interactions with the interactive character 12, such as the interactive character application server 18 starting video-on-demand in response to the user 16 asking his interactive character 12 to show a specific video. Furthermore, in response to purchase orders, for example for video-on-demand, sent by the user 16, the interactive application server 18 updates a property of the interactive character 12, such as, in this specific embodiment, the weight of the interactive character 12. This means, that purchasing services results in the interactive character 12 growing, as if the interactive character 12 is actually fed by the purchases. The interactive application server 18 further allows the user 16 to buy goodies or items for the interactive character 12, such as clothes or toys to play with. In addition to receiving user input through the set-top box 32 or the SMS-gateway 34 this specific embodiment also receives user input through an OSS/BSS-gateway 46 by means of an application interface 44 from an OSS/BSS-system 42. The OSS/BSS-system 42 allows the user 16 to dial a phone number and, for example, buy credits or request services through, for example, a voice response system. The credits are useable by the user 16 for starting services, such as video-on-demand or for buying items or goodies for the interactive character 12. The BSS-system 42 is, among other things, responsible for handling the payment orders related to the purchase orders of the users. The OSS-system 42 comprises among other things user related information such as an identification of the terminal, for example the set-top box, that is linked to the user. This identification comprises in some of the embodiments according to the invention the address of the terminal.

The embodiment according to the invention described and shown in the description and the annexed figure are only exemplary embodiments. The man skilled in the art will appreciate that many changes and modifications are possible which fall within the scope of the present invention. The protection sought is therefore defined by the following claims.

## Claims

1. System (10) for presenting on a television screen an interactive character (12) that responds to user input comprising:
image generation means (18) for generating an image of the interactive character (12), wherein the image generation means (18) are connectable to at least a television (14) for displaying the image of the generated interactive character (12) on the television screen;
input means (22, 24, 42) for receiving input from a user (16); and
control means (18) connected to the input means (22, 24, 42) and to the image generation means (18), for controlling the appearance of the interactive character (12) in response to the user input received by the input means (22, 24, 42).

2. System (10) according to claim 1, wherein controlling the appearance of the interactive character (12) comprises animating the interactive character (12).

3. System (10) according to claim 1, wherein the input means comprise at least one of:
- a set-top box (32) for receiving user input from set-top box input means (22) connected to the set-top box (32);
- an SMS-gateway (34) for receiving user input by means of an SMS-message;
- an OSS-gateway (46) for receiving user input via an Operations Support System (42); and
- a BSS-gateway (46) for receiving user input via a Business Support System (42).

4. System (10) according to claim 1, wherein the user input comprises a purchase order and the system (10) further comprises purchase order processing means for processing the received purchase order.

5. System (10) according to claim 1, further comprising output sending means for sending a message in response to the user input received by the input means (22, 24, 42).

6. System (10) according to claim 5, wherein the output sending means comprise at least one of:
- an SMS-gateway (34) for sending an SMS-message;
- an OSS-gateway (46) for sending a message to the Operations Support System (42); and
- a BSS-gateway (46) for sending a message to a Business Support System (42).

7. Method for presenting on a television screen an interactive character (12) that responds to user input, comprising:
generating an image of the interactive character (12);
displaying the generated image of the interactive character (12) on the television screen;
receiving input from a user (16);
changing the image of the interactive character (12) in response to the received user input; and
updating the displayed image of the interactive character (12) on the television screen with the changed image of the interactive character (12).

8. Method according to claim 7, wherein the user input comprises a purchase order, and the method further comprises:
processing the received purchase order.

9. Method according to claim 7, further comprising sending an output message in response to the received user input.
